(19) Europäisches Patentamt / European Patent Office / Office européen des brevets

(11) **EP 3 464 387 B1**

(12) **FASCICULE DE BREVET EUROPEEN**

(45) Date de publication et mention de la délivrance du brevet:
**15.07.2020 Bulletin 2020/29**

(21) Numéro de dépôt: **17732513.1**

(22) Date de dépôt: **30.05.2017**

(51) Int Cl.:
*C08C 3/00* *(2006.01)*     *C08L 7/02* *(2006.01)*

(86) Numéro de dépôt international:
**PCT/FR2017/051340**

(87) Numéro de publication internationale:
**WO 2017/207912 (07.12.2017 Gazette 2017/49)**

(54) **PROCEDE DE SECHAGE D'UN CAOUTCHOUC NATUREL**

TROCKNUNGSVERFAHREN VON NATURKAUTSCHUK

DRYING PROCESS OF NATURAL RUBBER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.05.2016 FR 1654878**

(43) Date de publication de la demande:
**10.04.2019 Bulletin 2019/15**

(73) Titulaire: **Compagnie Générale des Etablissements Michelin
63000 Clermont-Ferrand (FR)**

(72) Inventeurs:
• **DUSSILLOLS, Jérôme
63040 CLERMONT-FERRAND Cedex 9 (FR)**
• **MERCERON, Jean-Luc
63200 MOZAC (FR)**
• **GEFFROY, Sébastien
63040 CLERMONT-FERRAND Cedex 9 (FR)**
• **MARCHI, Alexandre
63040 CLERMONT-FERRAND Cedex 9 (FR)**

(74) Mandataire: **Gandon-Pain, Sylvie
Manufacture Française des
Pneumatiques Michelin
CBS/CORP/J/PI - F35 - Ladoux
23, place des Carmes-Déchaux
63040 Clermont-Ferrand Cedex 9 (FR)**

(56) Documents cités:
EP-A1- 2 457 948     EP-A1- 2 671 913
WO-A1-2015/028615

**Description**

L'invention concerne un procédé de séchage d'un caoutchouc naturel à partir d'un coagulum de caoutchouc naturel.

Le caoutchouc naturel qui contient une matrice polyisoprène à fort taux de cis est un élastomère très largement utilisé dans le domaine du pneumatique en raison de ses propriétés remarquables. Par exemple, il est utilisé dans les compositions de caoutchouc destinées à la fabrication de semi-finis pour les véhicules transportant de lourdes charges, en raison du compromis de performance qu'il peut apporter au pneumatique. En effet, l'introduction de caoutchouc naturel dans une composition de caoutchouc renforcée par une charge renforçante comme un noir de carbone confère à la composition de caoutchouc un compromis tout à fait intéressant en terme d'hystérèse et d'usure qui se traduit en terme de performance pour le pneumatique par un bon compromis entre l'endurance et l'usure du pneumatique.

Le caoutchouc naturel provient de la matière sèche caoutchouteuse du latex de caoutchouc naturel, très souvent extraite de l'hévéa après saignée : le latex est généralement recueilli dans un godet appelé tasse. Selon un premier procédé de coagulation dit spontané, le latex coagule directement dans la tasse pour former un coagulum dit fond de tasse (en anglais « cup lump »), appellation bien connue de l'homme du métier dans le domaine de la fabrication du caoutchouc naturel. Selon un deuxième procédé de coagulation dit provoquée, le latex encore liquide dans la tasse est transvasé, éventuellement stabilisé ou centrifugé, puis coagulé par exemple à l'aide d'un agent chimique.

Le produit de la coagulation, spontanée ou provoquée, du latex de caoutchouc naturel, ci-après appelé produit de la coagulation, comprend la matrice polyisoprène imbibée d'un sérum. Le produit de la coagulation peut être lavé pour éliminer les contaminants tels que les feuilles, les brindilles, le sable et autres débris, mais aussi il peut être déchiqueté sous forme de granulés (en anglais « crumbs »), lavé à l'eau dans des piscines, éventuellement essoré, et enfin séché pour éliminer l'eau. On dénombre plusieurs procédés de séchage utilisés pour éliminer l'eau du caoutchouc naturel, largement connus et pratiqués par l'homme du métier dans le domaine de la fabrication du caoutchouc naturel, notamment pour la fabrication des grades TSR3, TSR5, TSR10, TSR20 ou RSS. Selon les procédés traditionnellement utilisés sur les sites de fabrication du caoutchouc naturel, le produit de la coagulation est séché à une température modérée de l'ordre de 40 à 60°C pendant 4 à 6 jours, par exemple à l'air libre ou dans des fumoirs, ou bien à une température plus élevée, typiquement de 90 à 130°C, pendant un temps beaucoup plus court dans des tunnels sous circulation d'air.

Ces étapes de séchage traditionnellement utilisées ont l'inconvénient de comporter des temps de séchage longs ou de dégrader la macrostructure des chaînes polyisoprène du caoutchouc naturel, ou de diminuer la résistance du caoutchouc naturel au vieillissement par oxydation.

Pour résoudre les problèmes mentionnés ci-dessus, il a été décrit de sécher le caoutchouc naturel autrement que par les procédés traditionnels. Par exemple, le document JP 2010-260930 enseigne un séchage du produit de la coagulation dans une extrudeuse par un essorage à 130°C, puis sur un tamis vibrant à une température d'au plus 130°C. Le document US 20130032045 décrit un procédé qui comprend un essorage du produit de la coagulation dans une extrudeuse, puis l'élimination de l'eau résiduelle à des températures de 140 à 180°C et à des pressions de 15 à 20MPa dans une structure de tunnel allongé comportant une vis.

Par ailleurs, il est connu que le latex de caoutchouc naturel contient des composés azotés tels que des protéines. La présence de ces composés azotés dans le caoutchouc naturel dont la teneur dans le caoutchouc naturel est mesurée par le taux d'azote dans le caoutchouc naturel, peut être à l'origine des allergies observée au contact des produits manufacturés à partir de caoutchouc naturel, tels que des gants. La teneur en composés azotés dans le caoutchouc naturel étant corrélée au taux d'azote dans le caoutchouc naturel, il est donc une préoccupation constante de réduire le taux d'azote dans le caoutchouc naturel. Il est connu de diminuer le taux d'azote par des traitements chimiques effectués sur le latex de caoutchouc naturel ou sur le produit de la coagulation, notamment par réaction de saponification ou par réaction enzymatique, comme cela est décrit par exemple dans les documents EP 584 597 et WO 2005590412. L'inconvénient de ces technologies est d'introduire au moins une étape supplémentaire en plus des étapes de lavage et de séchage dans le procédé de fabrication du caoutchouc naturel.

Il est donc d'intérêt de trouver un procédé qui permette de résoudre l'ensemble des problèmes mentionnés qui sont liés à l'élimination de l'eau et des composés azotés du caoutchouc naturel tout en préservant les propriétés du caoutchouc naturel.

Les Demanderesses ont découvert de façon surprenante que l'application d'une détente à un coagulum de caoutchouc naturel dans des conditions de température et de pression spécifiques complétée éventuellement d'un séchage convectif ou d'une ou plusieurs nouvelles détentes permet à la fois d'éliminer l'eau et de réduire le taux d'azote dans le caoutchouc naturel. Typiquement à l'issue du procédé conforme à l'invention, la teneur en eau dans le caoutchouc naturel est inférieure à 0.8% et le taux d'azote est au plus de 0.3%, de préférence allant de 0.2% à 0.3%. Des modes de réalisation préférentiels de l'invention permettent d'atteindre une teneur en eau résiduelle aussi bas et un taux d'azote encore plus bas, à savoir une teneur en eau résiduelle inférieure à 0.8% et un taux d'azote inférieur à 0.3%, notamment compris entre 0.2% et 0.3%. Par ailleurs, les Demanderesses ont découvert que le caoutchouc naturel issu de variantes préférentielles du procédé conforme à l'invention présente une meilleure résistance au vieillissement par oxydation ainsi qu'une masse molaire moyenne en poids élevée.

Ainsi, un premier objet de l'invention est un procédé de séchage d'un caoutchouc naturel qui comprend les étapes suivantes :

a) disposer d'un coagulum de caoutchouc naturel humide,
b) comprimer le coagulum à une température allant de 185°C à 210°C,
c) soumettre le coagulum comprimé à une détente éclair adiabatique à une pression différentielle d'au moins 100 bars,
d) le cas échéant soumettre le coagulum résultant de l'étape c) à un séchage convectif ou à une ou plusieurs itérations de l'enchaînement des étapes b) et c).

Un autre objet de l'invention porte sur un caoutchouc naturel qui peut être obtenu par des modes de réalisation préférentiels du procédé conforme à l'invention et qui a la particularité de présenter à la fois une masse molaire moyenne en poids supérieure à 1 000 000, un taux d'azote inférieur à 0.3% et un index de rétention de plasticité supérieur à 100.

## I. DESCRIPTION DETAILLEE DE L'INVENTION :

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Sauf indication expresse différente, tous les pourcentages (%) indiqués sont des % en masse.

Dans la présente demande, on entend par latex de caoutchouc naturel le latex issu de la saignée de l'hévéa.

Dans la présente demande, on entend par extrudeuse une machine à vis sans fin qui comprend une entrée de matière dite trémie, un corps formé d'un cylindre (également appelé fourreau) dans lequel tourne une vis (une ou plusieurs) sans fin et une tête qui sert de support à une filière. Cette machine permet d'appliquer un séchage mécanique ou un séchage thermo-mécanique. Le séchage mécanique permet l'élimination du liquide par des forces purement mécaniques (pressage, essorage, ...). Il peut se réaliser par simple transfert de quantité de mouvement et éventuellement sans transfert thermique. Le séchage thermo-mécanique est réalisé par échauffement communiqué au produit à sécher par dégradation de l'énergie mécanique. L'eau incluse dans le produit à sécher se trouve à l'état liquide sous haute pression et à haute température. A la sortie de la filière la détente produite permet de flasher l'humidité et le cas échéant, selon la viscosité du produit, de fragmenter le produit.

Le procédé conforme à l'invention est adapté pour sécher un coagulum dont la teneur en eau à l'étape a) est de 3 à 5%. Il est également adapté pour sécher un coagulum dont la teneur en eau à l'étape a) est supérieure à 5%. Il est aussi tout à fait adapté pour sécher un coagulum dont la teneur en eau à l'étape a) est supérieure à 12%.

Le procédé conforme à l'invention permet l'obtention d'un caoutchouc naturel sec, c'est-à-dire un caoutchouc naturel dont la teneur en eau est inférieure à 0.8%. Le procédé permet également de produire un caoutchouc naturel non seulement sec, mais aussi un caoutchouc naturel dans lequel le taux d'azote est réduit. Le procédé conforme à l'invention permet une diminution du taux d'azote dans le caoutchouc naturel d'au moins 20%, voire davantage, puisque la diminution du taux d'azote peut aller jusqu'à 40%. L'ampleur de la diminution est fonction du taux d'azote présent dans le caoutchouc naturel utilisé à l'étape a). Plus le taux d'azote dans le caoutchouc naturel utilisé à l'étape a) est élevé, plus la diminution du taux d'azote dans le caoutchouc naturel séché par le procédé conforme à l'invention est élevée.

En effet, le taux d'azote dans le caoutchouc naturel utilisé à l'étape a) peut varier d'un caoutchouc naturel à l'autre. Il peut dépendre de la zone géographique de la culture de l'hévéa, de la variété végétale de l'hévéa, de la saison à laquelle la saignée a été réalisée, du temps de maturation qui correspond généralement au laps de temps passé entre la saignée et l'usinage (en anglais « remilling ») du caoutchouc naturel. On rappelle que l'usinage est l'appellation bien connue et utilisée pour décrire l'ensemble des opérations de traitement qui comprend les étapes de broyage, de lavage, de séchage.

Le taux d'azote du caoutchouc naturel utilisé à l'étape a) peut donc varier de 0.25% à plus de 0.3%, la valeur basse pouvant correspondre à des temps de maturation les plus importants. Le taux d'azote dans le caoutchouc naturel utilisé à l'étape a) est de préférence supérieur à 0.3%, notamment supérieur ou sensiblement égal à 0.4%. Ainsi, le procédé conforme à l'invention permet l'obtention d'un caoutchouc naturel sec dont le taux d'azote est au plus de 0.3%, de préférence allant de 0.2% à 0.3%, de manière plus préférentielle compris entre 0.2% et 0.3%.

Le coagulum utilisé à l'étape a) (ou autrement dit dont il est disposé à l'étape a)) est un produit de la coagulation du latex de caoutchouc naturel, indifféremment obtenu par une coagulation spontanée ou provoquée. De préférence, le coagulum est un fond de tasse.

Le coagulum est dit humide, car il est imbibé d'eau qui provient notamment des eaux de lavage résultant des opérations de lavage du coagulum généralement conduites en piscine sous eau. Le coagulum utilisé à l'étape a) est de préférence un coagulum qui a subi des opérations de lavage et contient généralement plus de 12% en masse d'eau. La teneur en eau dans le coagulum utilisé à l'étape a) est de manière plus préférentielle de 17 à 25%, de telles teneurs en eau étant celles généralement dosées dans les coagulums après les opérations de lavage dans les usines de remilling de caoutchouc naturel.

De préférence, le coagulum utilisé à l'étape a) se présente sous la forme de granulés (en anglais « crumbs »). De manière plus préférentielle, le coagulum utilisé à l'étape a) est sous la forme de granulés préalablement lavés à l'eau et par conséquent chargés en eau, notamment dans les teneurs indiquées plus haut, en particulier supérieures à 12%.

L'étape b) du procédé conforme à l'invention est une compression du coagulum. Cette compression est nécessaire pour pouvoir soumettre ultérieurement le coagulum à une détente adiabatique. La pression à laquelle est comprimé le coagulum doit être suffisante pour permettre une détente adiabatique à une pression différentielle d'au moins 100 bars. Le coagulum est comprimé à une pression préférentiellement d'au moins 100 bars, plus préférentiellement d'au moins 120 bars, encore plus préférentiellement d'au moins 150 bars.

La compression peut être réalisée par tout moyen connu pour mettre sous pression une matière caoutchouteuse imbibée d'eau. A titre de moyens appropriés, on peut citer des presses telles que celles constituées de mâchoires ou plaques qui prennent en sandwich le coagulum, des machines à vis sans fin équipées d'une filière en bout de vis. Pour atteindre les pressions utiles aux besoins de l'invention en bout de vis dans une machine à vis sans fin, l'homme du métier peut jouer par exemple sur le débit de coagulum dans la machine à vis sans fin, sur la vitesse de la vis, sur sa géométrie, sur la forme des trous de la filière, sur leur nombre ou sur leur diamètre. Une extrudeuse équipée en bout de vis d'une filière comportant plusieurs trous est tout particulièrement préférée.

A la pression utile aux besoins de l'invention pour réaliser la compression, le coagulum est porté à une température allant de 185 à 210°C. Dans une machine à vis sans fin comme une extrudeuse, le travail mécanique sous forte pression s'accompagne d'un échauffement de la matière caoutchouteuse du coagulum, ce qui a pour effet d'augmenter la température du coagulum. La température ne doit pas excéder 210°C pour ne pas dégrader les chaînes polyisoprène. En dessous de 185°C, la quantité de chaleur apportée au coagulum est insuffisante pour provoquer à la fois la vaporisation de l'eau et l'élimination d'une partie des composés azotés du caoutchouc naturel lors de la détente. De préférence, la température est d'au moins 190°C, ce qui permet d'augmenter ainsi l'efficacité du procédé. Ainsi, selon un mode de réalisation préférentiel, le coagulum est comprimé à l'étape b) à une température allant de 190°C à 210°C. Pour atteindre les températures utiles aux besoins de l'invention, des calories peuvent être aussi apportées en chauffant le moyen utilisé pour réaliser la compression, par exemple en chauffant les mâchoires ou plaques d'une machine à presse ou l'intérieur d'une machine à vis tel que le fourreau d'une extrudeuse par l'intermédiaire d'une double enveloppe.

Le temps pendant lequel le coagulum est soumis à la compression à la température et à la pression utiles aux besoins de l'invention est relativement court pour ne pas dégrader les chaînes polyisoprène, mais suffisant pour apporter la quantité de chaleur suffisante pour provoquer la vaporisation de l'eau et l'élimination d'une partie des composés azotés lors de la détente.

La détente adiabatique réalisée à l'étape c) est caractérisée de détente éclair en ce qu'elle permet au coagulum de passer d'un état comprimé à un état non comprimé de façon quasi immédiate, typiquement en un temps inférieur à la seconde. Elle est réalisée à une pression différentielle d'au moins 100 bars, ce qui permet de vaporiser l'eau et d'éliminer une partie des composés azotés par un effet flash. Plus la pression différentielle est importante, plus le flash est efficace pour réduire la quantité d'eau et le taux d'azote dans le caoutchouc naturel. De préférence, la pression différentielle est d'au moins 150 bars. La détente étant adiabatique, la détente se produit à la température à laquelle a été réalisée la compression. En fin de détente, le coagulum est généralement à la pression atmosphérique. Dans le cas où une extrudeuse équipée d'une filière en bout de vis est utilisée pour réaliser l'étape b), la détente adiabatique éclair à l'étape c) se produit en sortie de la filière. Une libération des contraintes jusqu'alors exercées sur le coagulum dans le fourreau a lieu en sortie de filière par la suppression de la compression, ce qui permet la détente adiabatique éclair en sortie de filière. Dans le cas où une presse est utilisée pour comprimer le coagulum, la libération des contraintes est provoquée par l'ouverture rapide de la presse.

Au moment de la détente réalisée à l'étape c), plus le coagulum présente une surface extérieure grande au contact de l'atmosphère, plus la surface d'échange du coagulum avec l'atmosphère est grande, plus le procédé est efficace pour réduire la quantité d'eau et le taux d'azote dans le caoutchouc naturel. Par conséquent, il est préférable que le coagulum présente une surface par unité de volume la plus grande possible à l'étape c). Par exemple, dans le cas d'une détente en sortie de filière d'une extrudeuse, le coagulum se présente avantageusement sous une forme divisée à l'étape c). Typiquement, le coagulum peut être découpé juste avant la détente, par la mise en place de moyen apte à découper le coagulum en sortie de filière tel qu'un couteau ou un granulateur, préférentiellement un granulateur. De tels dispositifs comprenant un granulateur en sortie de filière en bout de vis d'une extrudeuse sont bien connus pour être utilisés dans les procédés de fabrication des caoutchoucs synthétiques. Dans le cas où une presse est utilisée comme moyen pour mettre sous pression le coagulum humide, la surface d'échange du coagulum avec l'atmosphère ambiante est renouvelée avant chaque nouveau cycle de compression et de détente, par exemple en repliant la surface

EP 3 464 387 B1

du coagulum sur lui-même avant de la comprimer à nouveau. Ce renouvellement de surface permet aussi d'améliorer l'efficacité du procédé qui met en œuvre une presse.

Selon une première alternative, l'étape d) consiste à sécher par convection le coagulum. Tout moyen connu pour sécher par convection peut convenir. En particulier est préféré un lit fluidisé tel qu'un tamis vibrant, dispositif connu et conventionnellement utilisé dans les procédés de fabrication de caoutchoucs synthétiques. Le séchage convectif est réalisé de préférence sous air. Le séchage convectif sous air se fait de préférence à une température allant de 110°C à 130°C. Le temps de séchage par convection est ajusté par l'homme du métier en fonction de la température de séchage à l'étape d) et en fonction de la teneur en eau résiduelle dans le coagulum à l'issue de l'étape c). Il est préféré d'appliquer à l'étape d) un temps de séchage le plus court possible pour préserver la structure des chaînes polyisoprène du caoutchouc naturel et ses propriétés. Typiquement le temps de séchage par convection est inférieur à 10 minutes de façon à obtenir un caoutchouc naturel contenant moins de 0.8% d'eau.

Selon une deuxième alternative, l'étape d) consiste à soumettre le coagulum à une nouvelle compression suivie d'une nouvelle détente dans les conditions décrites de l'étape b) et de l'étape c) respectivement. Le cas échéant, il peut s'avérer nécessaire de répéter cet enchaînement d'étapes pour atteindre à la fois une teneur en eau dans le caoutchouc naturel inférieure à 0.8% et une réduction du taux d'azote d'au moins 20% dans le caoutchouc naturel.

Selon un mode de réalisation, l'étape d) est effectuée. La conduite de l'étape d) est opportune selon la teneur en eau résiduelle obtenue à l'issue de l'étape c) du procédé. La teneur en eau dans le caoutchouc naturel à l'issue de l'étape c) dépend non seulement des conditions de pression et de température appliquées dans les étapes b) et c), mais aussi de la valeur initiale en eau dans le coagulum utilisé à l'étape a). L'homme du métier comprend bien que plus le coagulum de l'étape a) est chargé en eau, plus la teneur en eau résiduelle peut être élevée à l'issue de l'étape c) et qu'il peut être alors nécessaire de procéder à un séchage complémentaire, étape d). Par exemple, le traitement selon le procédé de deux coagulums chargés de 3 à 5% d'eau pour le premier et plus de 12% d'eau pour le deuxième conduit à l'issue de l'étape c) à une teneur en eau résiduelle inférieure à 0.8% pour le premier et de 3 à 5% pour le deuxième. Dans le cas du deuxième coagulum, l'étape d) s'avère nécessaire pour réduire la teneur en eau à une valeur inférieure à 0.8%.

Pour compléter le séchage d'un coagulum qui résulte de l'étape c), l'homme du métier choisit préférentiellement une alternative plutôt que l'autre en tenant compte de la teneur en eau résiduelle et du taux d'azote dans le caoutchouc naturel. Le séchage par convection ne pouvant assurer que l'élimination de l'eau, il est préféré pour compléter le séchage d'un coagulum résultant de l'étape c) dont le taux d'azote est au plus de 0.3% et dont la teneur en eau est comprise dans un domaine allant de 3 à 5%. C'est typiquement le cas lorsque l'étape c) est conduite dans une extrudeuse équipée en bout de vis d'une filière et d'un outil pour découper le coagulum, tel qu'un granulateur.

Une forme divisée du coagulum est préférée à l'étape d), qu'elle soit mise en œuvre selon la première ou la deuxième alternative. Pour les mêmes raisons que celles mises en avant dans l'étape c), elle permet d'améliorer l'efficacité de l'étape d) dans l'obtention de teneur en eau résiduelle inférieure à 0.8% dans le caoutchouc naturel, notamment en réduisant la durée de l'étape d).

L'extrudeuse utile aux besoins de l'invention peut être une extrudeuse disponible sur le marché, notamment celles commercialisées par les sociétés Anderson, FOM et Welding, comme par exemple l'Expander d'Anderson, l'Extruder Dryer de FOM, le VCU de Welding. Des variantes d'extrudeuses sont préférentielles en ce qu'elles permettent en sortie de filière d'atteindre des débits plus élevés en coagulum ou de favoriser la détente adiabatique. Une telle variante préférentielle est une extrudeuse dont le fourreau présente dans la zone d'alimentation de l'extrudeuse un (un ou plusieurs) moyen d'évacuation de l'eau (eau libre, sous forme liquide). Comme moyen d'évacuation, on peut citer des rainures dans l'épaisseur du fourreau qui débouchent sur la surface intérieure du fourreau, une ou plusieurs ouvertures dans la zone d'alimentation de l'extrudeuse, ouverture qui permet d'évacuer l'eau hors du fourreau. Ces ouvertures peuvent se présenter sous la forme de fente, de grille, de trou circulaire. La zone d'alimentation est la zone qui se trouve sous l'ouverture de la trémie.

L'extrudeuse utile aux besoins de l'invention est de préférence une extrudeuse monovis.

Selon un mode de réalisation particulier, le procédé conforme à l'invention a l'avantage de pouvoir être mis en œuvre avec un dispositif comprenant une seule machine à vis sans fin et un lit fluidisé à air chaud, la machine à vis sans fin étant une extrudeuse équipée en bout de vis d'une filière à trous et d'un moyen apte à découper le coagulum et disposé après la filière, lequel moyen est de préférence un granulateur.

Selon une variante de ce mode de réalisation particulier, le fourreau de l'extrudeuse présente dans la zone d'alimentation de l'extrudeuse un ou plusieurs moyens d'évacuation de l'eau, par exemple ceux mentionnés ci-dessus.

Selon une autre variante de ce mode de réalisation particulier, l'extrudeuse est une extrudeuse monovis.

Selon une autre variante de ce mode de réalisation particulier, l'extrudeuse comporte une double enveloppe.

Selon encore une autre variante de ce mode de réalisation particulier, le lit fluidisé à air chaud est un tamis vibrant.

Selon ce mode de réalisation particulier, y compris dans ses variantes qui peuvent être combinées, le procédé permet d'éliminer l'eau et une partie des composés azotés d'un coagulum sous la forme de granulés chargés en eau à une teneur supérieure à 12%. En effet, il permet l'obtention d'un caoutchouc naturel ayant une teneur en eau inférieure

5

à 0.8%, un taux d'azote inférieur à 0.3%, une masse molaire moyenne en poids supérieure à 1 000 000 g/mol et un index de rétention de plasticité supérieur à 100.

Selon ce mode de réalisation particulier, y compris dans ses variantes ci-dessus décrites, le procédé comprend de préférence les étapes a), b), c) et d), les étapes a), b) et c) étant tels que définis selon l'un quelconque des modes de réalisation de l'invention, l'étape d) étant définie selon l'alternative, y compris ses aspects préférentiels, qui a recours au séchage par convection.

Le caoutchouc naturel, autre objet de l'invention, a pour caractéristique essentielle de présenter une masse molaire moyenne en poids supérieure à 1 000 000 g/mol, une teneur en eau inférieure à 0.8%, un taux d'azote inférieur à 0.3% et un index de rétention de plasticité (PRI) supérieur à 100. Le caoutchouc naturel qui peut être obtenu selon des modes de réalisation préférentiels de l'invention présente des propriétés très améliorées en comparaison au caoutchouc naturel séché selon les procédés conventionnels tel qu'un caoutchouc naturel de grade TSR20. En effet, le caoutchouc naturel conforme à l'invention présente une résistance au vieillissement par oxydation très améliorée en raison de la valeur haute du PRI. Le PRI est le ratio exprimé en pourcentage de la plasticité du caoutchouc naturel vieilli sur la plasticité du caoutchouc naturel avant vieillissement. Sa détermination selon la norme ASTM D 3194-04 est utilisée pour donner une indication de la résistance à l'oxydation du caoutchouc naturel. Plus la valeur est élevée, meilleure est la résistance au vieillissement par oxydation. De préférence, le caoutchouc naturel conforme à l'invention présente un taux d'azote compris entre 0.2 et 0.3%.

Les caractéristiques précitées de la présente invention, ainsi que d'autres, seront mieux comprises à la lecture de la description suivante de plusieurs exemples de réalisation de l'invention, donnés à titre illustratif et non limitatif.

## II. EXEMPLES DE REALISATION DE L'INVENTION

### II.1.-Méthode de caractérisation des caoutchoucs naturels :

II.1.a-Taux d'azote :

Le taux d'azote a été mesuré selon la norme ASTM D 3533-90.

II.1.b-Teneur en eau :

La teneur en eau est déterminée avec un dessicateur halogène HB43-S Mettler Toledo. Le dessicateur est un dispositif automatisé qui intègre une coupelle, une balance et un couvercle destiné à fermer la coupelle. La coupelle est positionnée sur la balance. Le couvercle comprend un moyen de chauffage par une lampe halogène, ce moyen de chauffage se déclenchant lorsqu'on rabat le couvercle sur la coupelle. Dans la coupelle, on pèse exactement un échantillon de 10 grammes de caoutchouc naturel : le dispositif enregistre le poids correspondant « a ». On rabat le couvercle pour fermer la coupelle, ce qui déclenche la montée en température pour atteindre une consigne de 160°C. Lorsque le dispositif détecte une diminution de poids inférieure 0.001 g par minute, le dispositif relève un poids « b ». La teneur en eau dans l'échantillon est donnée en pourcentage massique par l'équation suivante :

$$\text{Teneur en eau (\%)} = 100*((a-b)/a)$$

II.1.c-Caractérisation de la macrostructure des caoutchoucs naturels par analyse SEC-RI-MALS (Steric Exclusion Chromatography - differential Refractive Index detectors - Multiangle Light Scatering detector) :

Les échantillons de caoutchouc naturel ont été mis en solution dans un solvant (tétrahydrofurane, THF) pendant 7 jours à 25°C à une concentration de 5mg/mL. La fraction soluble est collectée et la concentration est ajustée à 2mg/ml. Apres filtration à 0.45 $\mu$m, 100 $\mu$L sont injectés dans un jeu de colonne constitué de quatre colonnes de chez Polymer Lab (2 colonnes PLgel Mixed A et 2 colonnes PLgel mixed B), le solvant d'élution étant du tétrahydrofurane stabilisé (250 ppm de BHT), le débit étant de 0,5 mL/min, la température du système étant de 35°C, la durée d'analyse étant de 90 min. Le système de détection utilisé est double : un détecteur réfractométrique différentiel de concentration (Optilab T-rEX de Wyatt) et un détecteur multiangle de diffusion de la lumière (Dawn Heleos de Wyatt). Les données sont traitées sous le logiciel Astra et permettent d'obtenir : la masse molaire moyenne en nombre (Mn), la masse molaire moyenne en poids (Mw), et la polydispersité (Ip) des échantillons analysés.

II.1.d-Index de rétention de plasticité (PRI) :

Il est mesuré selon la norme ASTM D 3194-04 .

II.1.e-Plasticité Mooney :

On utilise un consistomètre oscillant tel que décrit dans la norme française NF T 43-005 (Novembre 1980). La mesure de plasticité Mooney se fait selon le principe suivant : le caoutchouc naturel est moulé dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de 8 rotations. La plasticité Mooney (ML 1+4) est exprimée en "unité Mooney" (UM, avec 1 UM = 0,83 Newton.mètre).

II.2-Exemple de séchage dans une presse :

On comprime 20 g de granulés de coagulum de fond de tasse ayant une teneur en eau supérieure à 12% et un taux d'azote de 0.41%, lesquels granulés sont disposés entre deux plaques d'une presse disposées horizontalement et chauffées à une température donnée indiquée dans le tableau 1 pour chacun des essais 1 à 5. Une pression de 150 bars est appliquée pendant 1 minute (laps de temps qui permet de porter le coagulum à la température de la presse), à la suite de laquelle on ouvre la presse très rapidement (en moins d'une seconde) afin d'ôter la pression sur le coagulum et produire la détente adiabatique éclair. On réitère l'opération de compression et de détente par ouverture de la presse selon le même opératoire décrit précédemment 1 à 3 fois, comme indiqué dans le tableau 1. Entre chaque cycle de compression détente, le caoutchouc est replié sur lui-même pour renouveler la surface d'échange.

Après chaque cycle de compression et de détente, on mesure le taux d'azote dans le caoutchouc naturel.

Tableau 1

|  | Température (°C) | Nombre d'itérations | Taux d'azote (%) |
|---|---|---|---|
| Essai 1 | 150 | 1 | 0.38 |
|  |  | 2 | 0.37 |
|  |  | 3 | 0.40 |
| Essai 2 | 170 | 1 | 0.34 |
|  |  | 2 | 0.32 |
|  |  | 3 | 0.33 |
| Essai 3 | 190 | 1 | 0.38 |
|  |  | 2 | 0.31 |
|  |  | 3 | 0.25 |
| Essai 4 | 200 | 1 | 0.39 |
|  |  | 2 | 0.32 |
|  |  | 3 | 0.30 |
| Essai 5 | 210 | 1 | 0.33 |
|  |  | 2 | 0.29 |
|  |  | 3 | 0.29 |

Les essais 1 et 2 ne sont pas conformes à l'invention, puisque le coagulum est comprimé à une température de 150 et 170°C respectivement. Les essais 3 à 5 sont conformes à l'invention, puisque le coagulum est comprimé à une température de 190, 200 et 210°C.

Après 3 itérations, tous les caoutchoucs naturels ont une teneur en eau inférieure à 0.8%. En revanche, seuls les essais conformes à l'invention conduisent à l'obtention d'un caoutchouc naturel ayant un taux d'azote de 0.3% au plus. On note qu'une température de 170°C à l'étape b) est insuffisante pour réduire à la fois la teneur en eau et le taux d'azote. On note que les essais pour lesquels la température à l'étape b) est d'au moins 185°C permettent de réduire à la fois la teneur en eau et le taux d'azote : les essais 3 à 5 permettent l'obtention d'un caoutchouc naturel présentant à la fois une teneur en eau inférieure à 0.8% et un taux d'azote de 0.3% au plus.

II.3-Exemple de séchage dans une extrudeuse équipée d'une filière à trous en bout de vis et d'un granulateur, suivi d'un séchage sur un tamis vibrant :

On alimente une extrudeuse d'un coagulum de fond de tasse sous la forme de granulés ayant une teneur en eau supérieure à 12% et un taux d'azote de 0.38%. L'extrudeuse est une extrudeuse monovis, elle est équipée d'une filière à trous en bout de vis et d'un granulateur disposé en sortie de filière. L'extrudeuse comporte une double enveloppe, son fourreau présente dans la zone d'alimentation des moyens d'évacuation d'eau (rainures, fentes, trous). La vitesse de la vis est de 150 tour/min, la pression est de 155 bars, la température du coagulum est de 194°C, la température et la pression étant mesurées par des capteurs positionnés au plus près de la filière, entre la filière et l'extrémité de la vis la plus proche de la filière. Sorti d'extrudeuse, le coagulum sous la forme de granulés est séché sur un tamis vibrant à air chaud à une température de 130°C pendant environ 5 minutes. On récupère le caoutchouc naturel présentant les caractéristiques suivantes :

Teneur en eau : 0.4%    Taux d'azote : 0.28%    PRI : 109
Mn : 890 000 g/mol    Mw : 1 250 000 g/mol    ML: 62

Au lieu d'être séché selon le mode opératoire décrit ci-dessus et conforme à l'invention, le même coagulum de départ que celui utilisé pour alimenter l'extrudeuse, également sous la forme de granulés, a été séché selon un procédé traditionnel classiquement utilisé pour la fabrication du grade TSR20, c'est-à-dire un séchage dans un tunnel sous air chaud à une température allant de 108°C à 125°C pendant 4h30 minutes. Le caoutchouc naturel résultant de ce procédé présente les caractéristiques suivantes :

Teneur en eau : 0.6%    Taux d'azote : 0.38 %    PRI : 64
Mn : 582 000 g/mol    Mw : 898 000 g/mol    ML: 71

On observe que contrairement au procédé de séchage traditionnellement utilisé pour la fabrication de grade TSR20, le procédé conforme à l'invention permet l'obtention d'un caoutchouc naturel qui est non seulement séché (teneur en eau inférieure à 0.8%), mais aussi qui présente un taux d'azote réduit qui est de 0.3% au plus, une masse molaire moyenne en poids supérieure à 1 000 000, et un indice de rétention de plasticité supérieure à 100.

**Revendications**

1.    Procédé de séchage d'un caoutchouc naturel qui comprend les étapes suivantes :

a) disposer d'un coagulum de caoutchouc naturel humide,
b) comprimer le coagulum à une température allant de 185°C à 210°C,
c) soumettre le coagulum comprimé à une détente éclair adiabatique à une pression différentielle d'au moins 100 bars,
d) le cas échéant soumettre le coagulum résultant de l'étape c) à un séchage convectif ou à une ou plusieurs itérations de l'enchaînement des étapes b) et c).

2.    Procédé selon la revendication 1 dans lequel la température est de 190°C à 210°C à l'étape b).

3.    Procédé selon la revendication 1 ou 2 dans lequel la pression différentielle est d'au moins 150 bars à l'étape c).

4.    Procédé selon l'une quelconque des revendications 1 à 3 dans lequel le coagulum est à la pression atmosphérique en fin de détente.

5.    Procédé selon l'une quelconque des revendications 1 à 4 dans lequel l'étape d) est effectuée.

6.    Procédé selon l'une quelconque des revendications 1 à 5 dans lequel l'étape d) est un séchage convectif, de préférence sous air.

7.    Procédé selon l'une quelconque des revendications 1 à 6 dans lequel le séchage convectif est conduit sous air à une température allant de 110° à 130°C.

8.    Procédé selon l'une quelconque des revendications 1 à 7 dans lequel le coagulum utilisé à l'étape a) contient une teneur en eau supérieure à 12% en masse.

9.    Procédé selon l'une quelconque des revendications 1 à 8 dans lequel le coagulum utilisé à l'étape a) contient une teneur en eau supérieure à 5% en masse.

10. Procédé selon l'une quelconque des revendications 1 à 7 dans lequel le coagulum utilisé à l'étape a) contient une teneur en eau allant de 3 à 5% en masse.

11. Procédé selon l'une quelconque des revendications 1 à 10 dans lequel le coagulum utilisé à l'étape a) est un fond de tasse.

12. Procédé selon l'une quelconque des revendications 1 à 11, lequel procédé est mis en œuvre avec un dispositif comprenant une seule machine à vis sans fin et un lit fluidisé à air chaud, la machine à vis sans fin étant une extrudeuse équipée en bout de vis d'une filière à trous et d'un moyen apte à découper le coagulum et disposé après la filière.

13. Procédé selon la revendication 12 dans lequel le moyen apte à découper le coagulum est un granulateur.

14. Procédé selon l'une quelconque des revendications 12 à 13 dans lequel l'extrudeuse est une extrudeuse monovis.

15. Caoutchouc naturel présentant une masse molaire moyenne en poids supérieure à 1 000 000 g/mol, une teneur en eau inférieure à 0.8% en masse, un taux d'azote inférieur à 0.3% en masse et un index de rétention de plasticité supérieur à 100.

**Patentansprüche**

1. Verfahren zum Trocknen eines natürlichen Kautschuks, welches die folgenden Schritte umfasst:

   a) Bereitstellen eines wasserhaltigen Gerinnungsprodukts von Naturkautschuk,
   b) Zusammenpressen des Gerinnungsprodukts bei einer Temperatur im Bereich von 185 °C bis 210 °C,
   c) Einwirkenlassen einer adiabatischen Schnellentspannung auf das zusammengepresste Gerinnungsprodukt bei einem Differenzdruck von mindestens 100 bar,
   d) gegebenenfalls, Einwirkenlassen einer konvektiven Trocknung, oder eines oder mehrerer Durchläufe einer Abfolge der Schritte b) und c), auf das Gerinnungsprodukt, welches in Schritt c) erhalten wird.

2. Verfahren nach Anspruch 1, wobei die Temperatur in Schritt b) 190 °C bis 210 °C beträgt.

3. Verfahren nach Anspruch 1 oder 2, wobei der Differenzdruck im Schritt c) mindestens 150 bar beträgt.

4. Verfahren nach einem beliebigen der Ansprüche 1 bis 3, wobei das Gerinnungsprodukt nach Abschluss der Entspannung bei Atmosphärendruck vorliegt.

5. Verfahren nach einem beliebigen der Ansprüche 1 bis 4, wobei der Schritt d) durchgeführt wird.

6. Verfahren nach einem beliebigen der Ansprüche 1 bis 5, wobei es sich bei dem Schritt d) um ein konvektives Trocknen handelt, vorzugsweise unter Lufteinwirkung.

7. Verfahren nach einem beliebigen der Ansprüche 1 bis 6, wobei das konvektive Trocknen unter Einwirkung von Luft mit einer Temperatur im Bereich von 110 ° bis 130 °C erfolgt.

8. Verfahren nach einem beliebigen der Ansprüche 1 bis 7, wobei das Gerinnungsprodukt, welches in Schritt a) verwendet wird, einen Wassergehalt von mehr als 12 Massen-% aufweist.

9. Verfahren nach einem beliebigen der Ansprüche 1 bis 8, wobei das Gerinnungsprodukt, welches in Schritt a) verwendet wird, einen Wassergehalt von mehr als 5 Massen-% aufweist.

10. Verfahren nach einem beliebigen der Ansprüche 1 bis 7, wobei das Gerinnungsprodukt, welches in Schritt a) verwendet wird, einen Wassergehalt im Bereich von 3 bis 5 Massen-% aufweist.

11. Verfahren nach einem beliebigen der Ansprüche 1 bis 10, wobei es sich bei dem Gerinnungsprodukt, welches in Schritt a) verwendet wird, um im Sammelbehälter geronnene Klumpen handelt.

12. Verfahren nach einem beliebigen der Ansprüche 1 bis 11, wobei das Verfahren mittels einer Vorrichtung durchgeführt wird, die eine einzige Endlosschneckenmaschine und ein Heißluft-Fließbett umfasst, wobei die Endlosschneckenmaschine ein Extruder ist, der am Ende der Schnecke über eine Düse mit Löchern und über ein Mittel verfügt, welches dazu befähigt ist, das Gerinnungsprodukt zu schneiden, und welches der Düse nachgeschaltet ist.

13. Verfahren nach Anspruch 12, wobei es sich bei dem Mittel, welches dazu befähigt ist, das Gerinnungsprodukt zu schneiden, um eine Granuliervorrichtung handelt.

14. Verfahren nach einem beliebigen der Ansprüche 12 bis 13, wobei es sich bei dem Extruder um einen Einzelschneckenextruder handelt.

15. Naturkautschuk, der ein Gewichtsmittel des Molekulargewichts von mehr als 1.000.000 g/mol, einen Wassergehalt von weniger als 0,8 Massen-%, einen Stickstoffgehalt von weniger als 0,3 Massen-% und einen Plastizitätsindex von mehr als 100 aufweist.


**Claims**

1. Process for drying a natural rubber, which comprises the following steps:

   a) providing a wet natural rubber coagulum,
   b) compressing the coagulum at a temperature ranging from 185°C to 210°C,
   c) subjecting the compressed coagulum to a flash adiabatic expansion at a differential pressure of at least 100 bar,
   d) where appropriate, subjecting the coagulum resulting from step c) to convective drying or to one or more repetitions of the sequence of steps b) and c).

2. Process according to Claim 1, in which the temperature is from 190°C to 210°C in step b).

3. Process according to Claim 1 or 2, in which the differential pressure is at least 150 bar in step c).

4. Process according to any one of Claims 1 to 3, in which the coagulum is at atmospheric pressure at the end of expansion.

5. Process according to any one of Claims 1 to 4, in which step d) is carried out.

6. Process according to any one of Claims 1 to 5, in which step d) is convective drying, preferably under air.

7. Process according to any one of Claims 1 to 6, in which the convective drying is carried out under air at a temperature ranging from 110°C to 130°C.

8. Process according to any one of Claims 1 to 7, in which the coagulum used in step a) has a water content of greater than 12% by weight.

9. Process according to any one of Claims 1 to 8, in which the coagulum used in step a) has a water content of greater than 5% by weight.

10. Process according to any one of Claims 1 to 7, in which the coagulum used in step a) has a water content ranging from 3 to 5% by weight.

11. Process according to any one of Claims 1 to 10, in which the coagulum used in step a) is a cup lump coagulum.

12. Process according to any one of Claims 1 to 11, which process is carried out with a device comprising a single endless screw machine and a hot air fluidized bed, the endless screw machine being an extruder fitted at one screw end with a perforated die and with a means able to cut the coagulum, arranged after the die.

13. Process according to Claim 12, in which the means able to cut the coagulum is a pelletizer.

14. Process according to any one of Claims 12 to 13, in which the extruder is a single-screw extruder.

15. Natural rubber having a weight-average molar mass of greater than 1 000 000 g/mol, a water content of less than 0.8% by weight, a nitrogen content of less than 0.3% by weight and a plasticity retention index of greater than 100.

**RÉFÉRENCES CITÉES DANS LA DESCRIPTION**

**Documents brevets cités dans la description**

- JP 2010260930 A
- US 20130032045 A
- EP 584597 A
- WO 2005590412 A